# EUROPEAN PATENT SPECIFICATION

(11) **EP 1 888 682 B1**
(45) Date of publication and mention of the grant of the patent: **17.11.2010**
(21) Application number: 06753920.5
(22) Date of filing: 24.05.2006
(51) Int. Cl.: C08L 23/16, B32B 25/04, B32B 25/14, B32B 27/32, B60J 10/00, C08L 91/00

(54) **ELASTOMERIC STRUCTURES**
ELASTOMERE STRUKTUREN
STRUCTURES ELASTOMERES

(30) Priority: 03.06.2005 GB 0511320
(43) Date of publication of application: 20.02.2008
(73) Proprietor: ExxonMobil Chemical Patents Inc., Baytown, TX 77520-5200 (US); Exxonmobil Chemical Limited, Fareham, Hampshire PO15 7AP (GB)
(72) Inventor: JOURDAIN, Eric, B-1640 Rhode Saint Genese (BE)
(74) Representative: Veldhuizen, Albert Dirk Willem
(86) International application number: PCT/EP2006/005064
(87) International publication number: WO 2006/128646

(56) References cited:
- WO-A-02/051634
- US-A- 4 537 825
- US-A1- 2004 054 040
- US-A1- 2004 106 723

## Description

This invention relates to elastomeric structures, especially structures comprising two or more parts adhered together, such as weatherseals, and to a process of making such structures.

Elastomeric compositions are widely used in such applications as automobile parts, cables, and building and construction seals. In some cases, it is desirable to use a structure comprising two or more parts bonded together, each part being of a different elastomeric composition. For example, weatherseals for use in sealing automobile windows can include an extruded profile of cured EPDM (ethylene/propylene/diene monomer polymer) material onto which has been molded a TPE (thermoplastic elastomer) material. Frequently, the adhesion between the two materials is critical to the successful functioning of the article. It has been found, however, that a difference in properties or characteristics of the surfaces of the two compositions may cause difficulty in effecting bonding between them. There remains a need for an improved method of producing a structure having two dissimilar elastomeric materials, and for an improvement in such structures. The adhesion of a TPE material onto cured EPDM material is generally weak, and combinations of those materials therefore represent a special problem.

Addition of a plasticizer or other amorphous substance to a polyolefin is one way to modify their properties. For example, polyolefins and elastomers are blended with materials such as mineral oils which contain aromatic and/or other functional groups. Typically, addition of mineral oil also lowers the melt viscosity because the mineral oil itself has a viscosity well below that of the polyolefin.

Addition of compounds like mineral oils tend to improve the flexibility of a polyolefin, which identifies such compounds as "plasticizers" under the commonly accepted definition; that is, a substance that improves the flexibility, workability, or distensibility of a plastic or elastomer. Mineral oils are also often used as extenders, as well as for other purposes, in polyolefins.

To improve the low temperature characteristics, it is customary to choose lower molecular weight, amorphous compounds as plasticizers. Low molecular weight compounds are also chosen for their low viscosity, which typically translates into lower melt viscosity and improved processibility of the polyolefin composition. Unfortunately, this choice often leads to other problems. For example, all or some of the additive can migrate to a surface and evaporate at an unacceptably high rate, which results in deterioration of properties over time. If the flash point is sufficiently low (e.g., less than 200°C), the compound can cause smoking and be lost to the atmosphere during melt processing. It can also leach out of the polyolefin and impair food, clothing, and other articles that are in contact with the final article made from the plasticized polyolefin. It can also cause problems with tackiness or other surface properties of the final article.

Another shortcoming of typical additive compounds is that they often contain a high (greater than 5 wt%) degree of functionality due to carbon unsaturation and/or heteroatoms, which tends to make them reactive, thermally unstable, and/or incompatible with polyolefins, among other things. Mineral oils, in particular, consist of thousands of different compounds, many of which are undesirable for use in polyolefins due to molecular weight or chemical composition. Under moderate to high temperatures these compounds can volatilize and oxidize, even with the addition of oxidation inhibitors. They can also lead to problems during melt processing and fabrication steps, including degradation of molecular weight, cross-linking, or discoloration.

WO02/051634 discloses the use of a semi-crystalline random propylene-ethylene copolymer to improve the adhesive properties of EPDM, especially in adhesion to thermoplastic elastomer materials.

US2004/106723 discloses the use of polyalphaolefin liquid oligomers as a non-funtionalized plasticizer for a variety of polyolefins, including EPDM.

US4537825 discloses EPDM-TPE combinations not using an adhesive interlayer prepared by fusing the TPE onto a vulcanized EPDM.

US2004/054040 discloses the use of non-functionalized plasticizers in conjunction with polyolefins and is similar to WO2/051634 above.

These attributes of typical additive compounds like mineral oils limit the performance of the final plasticized polyolefin, and therefore its usefulness in many applications. As a result, they are not highly desirable for use as modifiers for polyolefms.

There remains a need for improved articles in which the adhesion between differing materials is enhanced, and for ways of making such articles.

The invention provides structure comprising a first member of an elastomeric ethylene/propylene/diene monomer (EPDM) rubber material and a second member, adhering to the first member, of a thermoplastic elastomeric polymer (TPE) material different from that of the first member wherein at least the first member comprises a liquid modifier which comprises carbon and hydrogen, does not contain an appreciable extent of functional groups due to carbon unsaturation and/or heteroatoms and has the following characteristics:
a. a pour point (ASTM D97) of -10°C or less;
b. Viscosity Index (VI) as measured by ASTM D2270 of 120 or more;
c. a flash point (ASTM D92) of 200°C or more; and
d. a specific gravity (ASTM D4052, 15.6/15.6 0C) of 0.88 or less.

The structure may be produced by a process of making a shaped elastomeric structure comprising the steps of compounding and shaping the EPDM material and a modifier as defined above to provide a first member and then applying onto that first member the TPEL material to provide a second member adhering to the first member.

Whilst not wishing to be limited by any theory, it is believed that the presence of the modifier in the first elastomeric material promotes the creation of domains at the material surface which are amorphous, uncured and thermosensitive, especially where that material is an EPDM material, which in turn promotes the physical interaction with the second elastomeric material during the bonding process.

The second elastomeric material may also comprise a modifier. It is believed that the presence of a modifier in both first and second elastomeric materials may further promote effective bonding between those two materials.

The modifier of the second elastomeric material may be the same or different to that of the first elastomeric material.

The shaped structure may also comprise one or more other members which may be of the same material as either the first or the second members or may be of one or more other materials. For example, the shaped structure may comprise two members of the same EPDM material with a member of TPE material bonded between them. In that case, one, two or all of the members may comprise a modifier.

The classes of materials described herein that are useful as modifiers can be utilized alone or admixed with other modifiers described herein in order to obtain desired properties.

The modifier of the present invention is a compound comprising carbon and hydrogen, and does not contain an appreciable extent of functional groups selected from hydroxide, aryls and substituted aryls, halogens, oxygen-containing groups such as alkoxys, carboxylates, carboxyl, esters, acrylates and ethers, and nitrogen-containing groups such as amines. By "appreciable extent of functional groups", it is meant that compounds comprising these groups are not deliberately added to the modifier, and if present at all, are present at less than 5 weight % (wt%) in one embodiment, more preferably less than 4 wt%, more preferably less than 3 wt%, more preferably less than 2 wt%, more preferably less than 1 wt%, more preferably less than 0.7 wt%, more preferably less than 0.5 wt%, more preferably less than 0.3 wt%, more preferably less than 0.1 wt%, more preferably less than 0.05 wt%, more preferably less than 0.01 wt%, more preferably less than 0.001 wt%, where wt% is based upon the weight of the modifier.

Preferably, the modifier has a total content of carbon and hydrogen, as determined by elemental analysis, of at least 95%, more preferably at least 96%, more preferably at least 97%, more preferably at least 98%, more preferably at least 99%, more preferably at least 99.3%, more preferably at least 99.9%, and more preferably at least 99.95% by weight.

The modifier is a hydrocarbon that does not contain olefinic unsaturation to an appreciable extent. By "appreciable extent of olefinic unsaturation" it is meant that the carbons involved in olefinic bonds account for less than 10 %, preferably less than 9 %, more preferably less than 8 %, more preferably less than 7 %, more preferably less than 6 %, more preferably less than 5 %, more preferably less than 4 %, more preferably less than 3 %, more preferably less than 2 %, more preferably less than 1 %, more preferably less than 0.7 %, more preferably less than 0.5 %, more preferably less than 0.3 %, more preferably less than 0.1 %, more preferably less than 0.05 %, more preferably less than 0.01 %, more preferably less than 0.001 %, of the total number of carbons. In some embodiments, the percent of carbons of the modifier involved in olefinic bonds is between 0.001 and 10 % of the total number of carbon atoms in the modifier, preferably between 0.01 and 7 %, preferably between 0.1 and 5 %, more preferably less than 1 %. Percent of carbons involved in olefinic bonds is determined by 1H NMR spectroscopy.

The modifier may comprise C25 to C1500 paraffins, C30 to C500 paraffins, or consist essentially of C35 to C300 paraffins, or C40 to C250 paraffins.

The modifier has a pour point (ASTM D97) of less than -10°C and may have a pour point, less than -20°C, less than -30°C, less than -40°C, less than -50°C or less than -60°C, and greater than -120°C or greater than -200°C wherein a desirable range may include any upper pour point limit with any lower pour point limit described herein.

Any modifier described herein has a Viscosity Index (VI) as measured by ASTM D2270 of 120 or more, preferably 125 or more, more preferably 130 or more . The modifier may have a VI between less than 400, preferably between 120 and 350.

The modifier may have a kinematic viscosity at 100°C (ASTM D445) of from 3 to 3000 cSt, from 6 to 300 cSt, from 6 to 200 cSt, from 8 to 100 cSt, or from 4 to 50 cSt in yet another embodiment, or less than 50 cSt or less than 25 cSt, wherein a desirable range may comprise any upper viscosity limit with any lower viscosity limit described herein.

In another embodiment any modifier described herein has a flash point (ASTM D92) of 200°C or more, preferably 210° or more, preferably 220°C or more, preferably 230°C or more, preferably 240°C or more, preferably 245°C or more, preferably 250°C or more, preferably 260°C or more, preferably 270°C or more, preferably 280°C or more. The modifier may have a flash point between 200°C and 300°C, preferably between 240°C and 290°C.

Any modifier described herein may have a dielectric constant measured at 20°C of less than 3.0 in one embodiment, and less than 2.8 in another embodiment, less than 2.5 in another embodiment, and less than 2.3 in yet another embodiment, and less than 2.1 in yet another embodiment.

The modifier described has a specific gravity (ASTM D4052, 15.6/15.6oC) of less than 0.88, and may have a specific gravity less than 0.87, less than 0.86 or less than 0.85, and may range from 0.80 to 0.87, from 0.81 to 0.86 or from 0.82 to 0.85, wherein a desirable range may comprise any upper specific gravity limit with any lower specific gravity limit described herein.

Any modifier described herein preferably has a low degree of color, such as typically identified as "water white", "prime white", "standard white", or "bright and clear," preferably an APHA color of 100 or less, preferably 80 or less, preferably 60 or less, preferably 40 or less, preferably 20 or less, as determined by ASTM D1209.

The modifier preferably may have a number average molecular weight (Mn) of 21,000 g/mole or less, preferably 20,000 g/mole or less, preferably 19,000 g/mole or less, preferably 18,000 g/mole or less, preferably 16,000 g/mole or less, preferably 15,000 g/mole or less, preferably 13,000 g/mole or less and 10,000 g/mole or less, or 5,000 g/mole or less, 3,000 g/mole or less, and 2,000 g/mole or less, 1500 g/mole or less, 1,000 g/mole or less, 900 g/mole or less, 800 g/mole or less, 700 g/mole or less, 600 g/mole or less or 500 g/mole or less. Preferred minimum Mn is at least 200 g/mole, preferably at least 300 g/mole. Further a desirable molecular weight range can be any combination of any upper molecular weight limit with any lower molecular weight limit described above. Mn is determined using size exclusion chromatography in 1,2,4-trichlorobenzene stabilised with butylated hydroxytoluene on three Polymer Laboratories PLgel 10 mm Mixed-B columns with a differential refractive index detector, an online light scattering detector and a viscometer.

Certain mineral oils have been classified as Hydrocarbon Basestock Group I, II, or III by the American Petroleum Institute (API) according to the amount of saturates and sulfur they contain and their viscosity indices. Group I basestocks are solvent-refined mineral oils that contain the highest levels of unsaturates and sulfur, and low viscosity indices; they tend to define the bottom tier of lubricant performance. They are the least expensive to produce and currently account for the bulk of the "conventional" basestocks. Groups II and III basestocks are more highly refined (e.g., by hydroprocessing) than Group I basestocks, and often perform better in lubricant applications. Group II and III basestocks contain less unsaturates and sulfur than the Group I basestocks, while Group III basestocks have higher viscosity indices than the Group II basestocks do. Additional API basestock classifications, namely Groups IV and V, are also used in the basestock industry. Group IV basestocks include polyalphaolefins. The five basestock groups are described by Rudnick and Shubkin in Synthetic Lubricants and High-Performance Functional Fluids, Second edition (Marcel Dekker, Inc. New York, 1999). The modifier may be a group III or group IV basestock.

In a preferred embodiment, the modifier is a polyalphaolefin. As polyalphaolefin (PAO), there may advantageously be used an oligomer of an alphaolefin having from 5 to 14 carbon atoms, e.g., 1-pentene, 1-hexene, 1-heptene, 1-octene, 1-nonene, 1-decene, 1-undecene and 1-dodecene. Preferred oligomers are of alphaolefins having from 6 to 12, more preferred are those having from 8 to 12, carbon atoms, and most preferred are oligomers of the C10 alphaolefin 1-decene. The materials may be, and usually are, mixtures of different oligomers of the same olefin, and they may be mixtures of oligomers of more than one olefin. The PAO may be hydrogenated, to remove all or substantially all residual double bonds.

Advantageously, the PAO has a number average molecular weight (Mn) within the range of from 100 to 21000, more advantageously from 200 to 10000, preferably from 200 to 7000, more preferably from 200 to 5000, and most preferably from 1000 to 4000. Advantageously, it has a pour point below -10°C, preferably below -20°C, and most preferably below -30°C.

Preferably, the PAO's have a kinematic viscosity at 100°C of 3 cSt or more, preferably 6 cSt or more, preferably 8 cSt or more, preferably 10 cSt or more, preferably 20 cSt or more, preferably 300 cSt or less, preferably 100 cSt or less. Advantageously, the PAO's have a kinematic viscosity at 100°C of between 3 and 1000 cSt, preferably between 6 and 300 cSt, preferably between 8 and 100 cSt, preferably between 8 and 40 cSt.

The PAO's have a Viscosity Index of 120 or more, preferably 130 or more, preferably 140 or more, preferably 150 or more, preferably 170 or more, preferably 200 or more, preferably 250 or more.

The PAO's have a flash point of 200°C or more, preferably 220°C or more, preferably 240°C or more, preferably between 260°C and 290°C.

Examples of suitable commercially available PAO's are those in the Spectrasyn, SHF, and SuperSyn (trademarks) series of ExxonMobil Chemical Company. Other PAO materials available include those sold under the Synfluid trademark by Chevron Phillips Chemical Co, under the Durasyn trademark by BP Amoco Chemicals, under the Nexbase trademark by Fortum Oil and Gas, under the Synton trademark by Crompton Corporation, and under the Emery trademark by Cognis Corporation.

In another embodiment, the modifier is a hydrocarbon fluid with a branched paraffin : normal paraffin ratio ranging from about 0.5:1 to 9:1, preferably from about 1:1 to 4:1. The branched paraffins of the mixture contain greater than 50 wt% (based on the total weight of the branched paraffins) mono-methyl species, for example, 2-methyl, 3-methyl, 4-methyl, or 5-methyl, with minimum formation of branches with substituent groups of carbon number greater than 1, such as, for example, ethyl, propyl or butyl; preferably, greater than 70 wt% of the branched paraffins are mono-methyl species. The paraffin mixture has a number-average carbon number (Cn) in the range of 20 to 500, preferably 30 to 400, preferably 40 to 200, preferably 25 to 150, preferably 30 to 100, more preferably 20 to 100, more preferably 20 to 70; has a kinematic viscosity at 100°C ranging from 3 to 500 cSt, preferably 6 to 200 cSt, preferably 8 to 100 cSt, more preferably 6 to 25 cSt, more preferably 3 to 25 cSt, more preferably 3 to 15 cSt; and boils within a range of from 100 to 350°C, preferably within a range of from 110 to 320°C, preferably within a range of 150 to 300°C. In a preferred embodiment, the paraffinic mixture is derived from a Fischer-Tropsch process. These branch paraffin/n-paraffin blends are described in, for example, US 5,906,727.

Thus, the modifier may comprise a wax isomerate lubricant oil basestock, which includes hydroisomerized waxy stocks (e.g. waxy stocks such as gas oils, slack waxes, fuels hydrocracker bottoms, etc.), hydroisomerized Fischer-Tropsch hydrocarbons and waxes, Gas-to-Liquids (GTL) base stocks and base oils, and other waxy feedstock derived hydroisomerized base stocks and base oils, or mixtures thereof. Fischer-Tropsch waxes, the high boiling point residues of Fischer-Tropsch synthesis, are highly paraffinic hydrocarbons with very low sulfur content, and are often preferred feedstocks in processes to make hydrocarbon fluids of lubricating viscosity.

The hydroprocessing used for the production of such base stocks may use an amorphous hydrocracking/hydroisomerization catalyst, such as one of the specialized lube hydrocracking catalysts or a crystalline hydrocracking /hydroisomerization catalyst, preferably a zeolitic catalyst. For example, one useful catalyst is ZSM-48 as described in U.S. Patent 5,075,269. Processes for making hydrocracked / hydroisomerized distillates and hydrocracked /hydroisomerized waxes are described, for example, in U.S. Patents Nos. 2,817,693; 4,975,177; 4,921,594 and 4,897,178 as well as in British Patent Nos. 1,429,494; 1,350,257; 1,440,230 and 1,390,359. Particularly favorable processes are described in European Patent Application Nos. 464546 and 464547. Processes using Fischer-Tropsch wax feeds are described in US 4,594,172 and 4,943,672.

Gas-to-Liquids (GTL) base stocks and base oils, Fischer-Tropsch hydrocarbon derived base stocks and base oils, and other waxy feedstock derived base stocks and base oils (or wax isomerates) that can be advantageously used in the present invention have a kinematic viscosities at 100°C of 3 cSt to 500 cSt, preferably 6 cSt to 200 cSt, preferably 8 cSt to 100 cSt, more preferably 3 cSt to 25 cSt. These Gas-to-Liquids (GTL) base stocks and base oils, Fischer-Tropsch hydrocarbon derived base stocks and base oils, and other waxy feedstock derived base stocks and base oils (or wax isomerates) have pour points (less than -10°C, preferably -15°C or lower, preferably -25°C or lower, preferably -30°C to -40°C or lower); have a high viscosity index (120 or greater, preferably 130 or greater, preferably 150 or greater); and are typically of high purity (high saturates levels, low-to-nil sulfur content, low-to-nil nitrogen content, low-to-nil aromatics content, low bromine number, low iodine number, and high aniline point). Useful compositions of Gas-to-Liquids (GTL) base stocks and base oils, Fischer-Tropsch hydrocarbon derived base stocks and base oils, and wax isomerate hydroisomerized base stocks and base oils are recited in U.S. Patent Nos. 6,080,301; 6,090,989, and 6,165,949 for example, and are incorporated herein in their entirety by reference.

The modifier may comprise a Group III hydrocarbon basestock, for example, a severely hydrotreated mineral oil having a saturates levels of 90% or more, preferably 92 % or more, preferably 94 % or more, preferably 95% or more. Preferably, the Group III basestock has a sulfur content of less than 0.03 %, preferably between 0.001 and 0.01 %. Preferably, the Group III basestock has a VI in excess of 120, preferably 130 or more. Preferably the Group III hydrocarbon base stock has a kinematic viscosity at 100°C of 3 to 100, preferably 4 to 100 cSt, preferably 6 to 50 cSt, preferably 8 to 20; and/or a number average molecular weight of 300 to 5,000, preferably 400 to 2,000, more preferably 500 to 1,000; and/or a carbon number of 20 to 400, preferably 25 to 400, preferably 35 to 150, more preferably 40 to 100. The Group III basestock has a pour point of -10°C or less. The Group III basestock has a flash point of 200°C or more.

Preferably, the modifier is not an oligomer or polymer of C4 olefin(s) (including all isomers, e.g. n-butene, 2-butene, isobutylene, and butadiene, and mixtures thereof). Such materials, which are referred to as "polybutene" liquids (or "polybutenes") when the oligomers comprise isobutylene and/or 1-butene and/or 2-butene, are commonly used as additives for polyolefins; e.g. to introduce tack or as a processing aid. The ratio of C4 olefin isomers can vary by manufacturer and by grade, and the material may or may not be hydrogenated after synthesis. Commercial sources of polybutenes include BP (Indopol grades) and Infineum (C-Series grades). When the C4 olefin is exclusively isobutylene, the material is referred to as "polyisobutylene" or PIB. Commercial sources of PIB include Texas Petrochemical (TPC Enhanced PIB grades). When the C4 olefin is exclusively 1-butene, the material is referred to as "poly-n-butene" or PNB.

Optionally, the modifier is not an oligomer or polymer of C4 olefin(s); however, an oligomer or polymer of C4 olefin(s) (including all isomers, e.g. n-butene, 2-butene, isobutylene, and butadiene, and mixtures thereof) may be present in the composition. In a preferred embodiment, the composition comprises less than 50 wt% (preferably less than 40%, preferably less than 30 wt%, preferably less than 20 wt%, more preferably less than 10 wt%, more preferably less than 5 wt%, more preferably less than 1 wt%, preferably 0 wt%) polymer or oligomer of C4 olefin(s) such as PIB, polybutene, or PNB, based upon the weight of the composition.

In a preferred embodiment, the modifier contains less than 50 weight % of C4 olefin(s), preferably isobutylene, based upon the weight of the modifier. Preferably the modifier contains less than 45 weight %, preferably less than 40 wt%, preferably less than 35 wt%, preferably less than 30 wt%, preferably less than 25 wt %, preferably less than 20 wt%, preferably less than 15 wt%, preferably less than 10 wt %, preferably 5 wt%, preferably less than 4 wt %, preferably less than 3%, preferably less than 2%, preferably less than 1 wt%, preferably less than 0.5 wt%, preferably less than 0.25 wt % of C4 olefin(s), preferably isobutylene, based upon the weight of the modifier.

The modifier is preferably:
i) a polyalphaolefin;
ii) a hydrocarbon fluid with a branched paraffin: normal paraffin ratio ranging from 0.5:1 to 9:1;
iii) a wax isomerate lubricant oil basestock;
iv) a Gas-to-Liquids basestock or base oil or a Fischer-Tropsch hydrocarbon derived basestock or base oil; or
v) a Group III hydrocarbon basestock.
(i) and v) are particularly preferred.

The first elastomeric material is a cross-linked elastomeric polymer material, of an ethylene/alpha-olefin/diene monomer terpolymer (EPDM), and the second elastomeric material is a thermoplastic elastomeric polymeric material, such as a TPE. Thus, the first elastomeric material is a compounded or non-compounded cross-linked non-thermoplastic elastomer, such as an EPDM and the second elastomeric material is a compounded or non-compounded TPE.

Ethylene/alpha-olefin/diene monomer terpolymers are derived from ethylene, one or more alpha-olefins, and one or more non-conjugated diene monomers. The preferred ethylene content is from 35 to 85 weight percent, based on the total weight of the ethylene/alpha-olefin/diene monomer terpolymer, preferably from 40 to 80 weight percent, and more preferably from 55 to 75 weight percent.

The diene monomer may be one or more non-conjugated dienes containing 30 carbon atoms or less, more preferably 20 carbon atoms or less. The preferred non-conjugated dienes include, but are not limited to one or more of 5-ethylidene-2-norbornene (ENB); 1,4-hexadiene; 1,6-octadiene; 5-methyl-1,4-hexadiene; 3,7-dimethyl-1,6-octadiene; vinylnorbornene; dicyclopentadiene; and combinations thereof. The preferred non-conjugated diene content is from 1 to 15 weight percent, based on the total weight of the ethylene/alpha-olefin/diene monomer terpolymer, and preferably from 5 to 11 weight percent.

Alpha-olefin will make up the remainder of the ethylene/alpha-olefin/diene monomer terpolymer, with percentages adding up to 100 weight percent. The preferred alpha-olefins include, but are not limited to C3, C4, C6, C8, and higher molecular weight alpha-olefins. More preferably, the alpha-olefin is propylene.

The molecular weight of ethylene/alpha-olefin/diene monomer terpolymers is often described with reference to the Mooney viscosity of the base terpolymer (that is, comprising no additives such as oil and carbon black) measured as ML (1+4, 125°C). Typical Mooney viscosity of the base polymer is in the range of 5 to 300 Mooney units (MU), and is preferably in the range of from 50 to 200 MU.

Ethylene/alpha-olefin/diene monomer terpolymers can be prepared using a conventional polymerization process, including traditional Ziegler-Natta catalysts, as well as metallocene catalysts. Synthesis of ethylene/alpha-olefin/diene monomer terpolymers is well known in the art. Reference may be had to G. ver Strate, Encyclopedia of Polymer Science and Engineering, vol. 6, 2nd Ed., 1986, pp. 522-564.

In one embodiment, the rubber component is Vistalon™ 7500 available from ExxonMobil Chemical Company, Houston, Texas. Vistalon™ 7500 is a polymer of ethylene-propylene-ethylidene norbornene having an ethylene content of about 55 weight percent and an ethylidene norbornene content of about 5 weight percent.

Advantageously, the second elastomeric material includes a TPE. The TPE may be, for example, a dispersion of a rubber. Examples of rubbers suitable for use as the dispersed phase in a TPE are one or more of styrene-butadiene (SBR), butadiene-acrylonitrile (NBR) isobutene-isoprene (IIR), and butadiene (BR). The dispersed rubber is preferably one which is vulcanizable during formation of the composition in the melt (dynamically vulcanizable) such as an EPDM, in an olefin polymer, for example, a propylene polymer or an ethylene/propylene copolymer. TPEs which comprise a vulcanised dispersed phase are referred to as TPE-Vs.

The term "dynamic vulcanization" is herein intended to include a vulcanization process in which an engineering resin and a vulcanizable elastomer are vulcanized under conditions of high shear. As a result, the vulcanizable elastomer is simultaneously cross-linked and dispersed as fine particles of a "micro gel" within the engineering resin. Procedures for dynamically vulcanizing materials are disclosed in U.S. Patent No. 6,013,727, Col. 2, line 57 - Col. 3, line 5, Col. 11, line 4 - Col. 13, line 63 and the examples therein. Examples of TPEs are disclosed in U.S. Patent No. 6,147,180, at Col. 1, lines 17 - Col. 2, line 30, and Col. 3, line 3 - Col. 8, line 5 and the examples therein.

Preferred TPEs are TPE-V (dynamically vulcanized), TPE-S (styrene-containing block copolymers, e.g., styrene-butadiene-styrene (SBS), styrene ethylene/butadiene styrene (SEBS) and styrene-isoprene-styrene (SIPS) block copolymers), TPE-O (polyolefin based, non-vulcanized) TPE-U (polyurethane), TPE-A (polymide based) and TPE- (polyester based). For a weatherseal, the most preferred material is TPE-V. TPE-A is suitable for use in, for example, automobile hoses. TPE-E is preferred for use in automotive gaiters and boots.

Advantageously, the TPE has a hardness in the range of from 50 to 90 Shore A (test method ISO 868,15s). Advantageously, the TPE has a tensile strength in the range of from 4 to 8 MPa (test method ISO 37/ASTM D 412). Preferably, the TPE has an elongation at break in the range of from 400 to 700% (test method, ISO 37/ASTM D 412). Preferably, the TPE has a compression set 22 hours at 70°C of between 25 and 70% (test method, ISO 815 Type A/ASTM D 395, Method B, Type 1).

The EPDM, preferably compounded with one or more other ingredients. Typical ingredients used to compound EPDM for extrusion and cure in order to produce a weatherseal profile are as follows:

Carbon black may be included. Typically carbon blacks are produced from the combustion of gas and/or a hydrocarbon feed and have a particle size from 20 nm to 100 nm for the regular furnace or channel black or from 150 to 530 nm for the thermal black. The level of carbon black in the compounded elastomeric material may range from 10 to 300 parts per 100 parts of elastomeric polymer (phr). 160 phr of carbon black is used in the example below.

Processing oil, preferably paraffinic, may be added to adjust both the viscosity of the elastomeric material compound for good processing and its hardness to within a range of 50 to 85 Shore A. The level of processing oil in the compound elastomeric material may be in the range of from 0 to 200 parts per hundred of elastomeric polymer (phr). 57 to 65 phr of processing oil is used in the example below.

Mineral filler can be used. It is typically calcium carbonate, preferably used in quantities from 0 to 150 phr. Silica, aluminium silicate and magnesium silicate are also used as fillers and other fillers are well known to the person skilled in the art. A silica-type filler is used in the example below at 15 phr.

Zinc oxide and stearic acid may added to activate any accelerators and attain a good cross-link density. Typical quantities are between 0 to 20 phr of zinc oxide and 0 to 5 phr of stearic acid. In the example below, those materials are used at 5 and 0.5 phr, respectively.

Polyethylene glycol may be used as a process aid and to activate the vulcanizing effect. Typical quantities are between 0 to 10 phr. The polyethylene glycols preferably have a molecular weight between 100 and 100000. 2 phr of polyethylene glycol having a molecular weight of 3350 MW is used in the example below.

Vulcanizing agents may be used to cause a chemical reaction resulting in cross-linking of the elastomer polymer chains. Typical are sulphur (0 to 10 phr), and sulfur donors such as thiuram disulfides (e.g tetramethylthiuramdisulfide) and thiomorpholines (e.g dithiodimorpholine) in the range of 0 to 10 phr. Accelerators are used to reduce the vulcanization time by increasing the speed of the cross-linking reaction. They are typically thiazoles such as 2-mercaptobenzothiazole or mercaptobenzothiazol disulfide, guanidines such as diphenylguanidine, sulfenamides such as N-cyclohexylbenzothiazolsulfenamide, dithiocarbamates such as zincdimethyldithiocarbamate, zincdiethyldithiocarbamate, and zincdibutyldithiocarbamate, thioureas such as 1,3-diethylthiourea, thiophosphates and others well known to the one skilled in the art of rubber compounding. All can be used in the range of 0 to 5 phr. Sulfur, sulphenamide, carbamate and thiazole are used in the example below.

Protective agents may be included in elastomeric material to improve its aging performance and resistance to heat, light and ozone. For example, Agerite Resin D is polymerised 1,2-dihydro-2,2,4-trimethylquinoline from R.T Vanderbilt, and Winstay 100 is a phenylene diamine from R.T Vanderbilt. None are used in the example below.

Other additives, especially those typically used in the art or described in the literature, may be present in the elastomeric materials of either or both members of the shaped structure of the invention, for example, processing aids, antioxidants, stabilizers, anticorrosion agents, UV absorbers, antistatics, slip agents, and pigments, dyes and other colorants. Polyethylene wax, petroleum resin (C5-C9) and moisture absorbant (calcium oxide) are used in the example below.

Where the material is to be cross-linked, cross-linking agents such as those mentioned above appropriate to the material and the cross-linking method may be incorporated.

The term "elastomeric material" as used herein can refer to both an elastomeric polymer material, such as an EPDM or a TPE, or to a compounded material containing one or more additives depending on the context. The term "EPDM material" refers to a compounded material comprising an EPDM. The term "TPE" refers both to the TPE as such, which is typically a dynamically vulcanised EPDM finely dispersed in a thermoplastic continuous matrix such as polypropylene, and also to a compounded material comprising a TPE and one or more ingredients such as filler (e.g. clay, talc and calcium carbonate), oil , various plastic materials (e.g. polyethylene, polypropylene of different composition, MW or MW distribution and styrenic resins) that are used to modify and optimize the properties/processing of the TPE. The terms "parts per hundred rubber" (phr) and "parts per hundred elastomeric polymer" are equivalent as used herein.

The modifier may be used, for example, in a proportion of up to 50%, advantageously in a range of from 1% to 40%, more advantageously from 2% to 35%, and preferably from 5 to 20% by weight, based on the weight of the elastomeric material. The modifier may be used alone or in combination with one or more other plasticizers, especially a plasticizing polymer, for example a low molecular weight polyethylene or ethylene copolymer, e.g. an ethylene alpha-olefin copolymer or plasticizing resin. Unlike certain mineral oil plasticizers, the selected modifier typically does not migrate to the surface, or bleed out, in processing or use.

Non-polymeric plasticizers may, however, be present. For example, mineral oil as in the example below or the phthalate, adipate, and trimellitate esters of alkanols, especially alkanols of from four to twelve carbon atoms, commonly used to plasticize polymers may be used, provided that in the polymer concerned they do not bleed out.

In a preferred embodiment, the shaped structure is a weatherseal, for example, an automobile weatherseal. The weatherseal may comprise a first member of an EPDM material comprising a modifier and a second member of TPE material adhering to the first member. The weatherseal may comprise a third member of EPDM material and the second member may serve to join the first and third members together in a joint.

The process of the invention preferably involves molding in the shaping of the first member and/or in the applying of the second member to the first member. Suitable molding techniques include transfer molding, injection molding and compression molding. The process of the invention may involve lamination of the first and second members, for example, by coextrusion.

The process of the second aspect of the invention may be a process of making a weatherseal. Advantageously, the first member is made by extruding the EPDM material and cutting the extruded material into the desired length. The EPDM material may be cured during or shortly after the extrusion step and prior to the cutting step. The second member of the TPE material is advantageously, injection molded onto the first member.

The applications of the shaped structures of the invention include all those where the properties or characteristics of one member differ from those of another, either in manufacture or use. As examples there may be mentioned as applications electrical apparatus, e.g., wire and cable, building and construction seals, e.g., in windows, concrete slabs and pipes, toys, sporting equipment, medical devices, outdoor furniture and automotive components. As examples of the latter, there may be mentioned bumpers, grills, interior and exterior trims, dashboard and instrument panels, spoilers, door and hood components, hoses, mirror housings, and especially weatherseals, for example glass run channels, door seals, belt line seals, insulation seals, roof seals, trunk seals, and hood seals. Other seals in automotive applications include those used to insulate parts from air, water, dust, and vibration, and interiors from noise and vibration. Other automotive applications include hoses, pipes, tubes and windscreen wipers.

The invention also provides the use in a structure comprising a first member comprising the EPDM material and a second member comprising the TPE material, different from the first, of a liquid modifier as defined above in combination with the EPDM material to improve adhesion between the first and second members.

The following example is provided for the purpose of illustration only:

A comparative elastomeric material A and an elastomeric material B according to the invention were prepared having the compositions shown in Table 1.

**Table 1: Composition of comparative elastomeric material A and example elastomeric material B**

| | A | B |
|---|---|---|
| Vistalon 7500 (EPDM) | 100 | 100 |
| Spheron 5000 carbon black | 160 | 160 |
| Flexon 815 plasticizer | 57 | 30 |
| Spectrasyn 100 plasticizer | | 35 |
| Sillitin Z mineral filler | 15 | 15 |
| PEG 3350 | 2 | 2 |
| PE wax | 7 | 7 |
| Escorez 1102 | 10 | |
| Zinc oxide | 5 | 5 |
| Stearic Acid | 0.5 | 0.5 |
| Calcium Oxide (Rhenogram Ca0-80) | 7 | 7 |
| Sulfur | 1.5 | 1.5 |
| CBS (N-cyclohexylbenzothiazol sulphenamide) | 1.5 | 1.5 |
| ZBEC (70%) | 1.3 | 1.3 |
| VulKalent E | 0.5 | 0.5 |
| MBTS (80%) (mercaptobenzothiazol disulphide) | 1 | 1 |
| Total, phr | 369.3 | 367.3 |

Vistalon 7500 is a bimodal EPDM polymer available from ExxonMobil Chemical.

Spectrasyn 100 is a polyalphaolefin having a kinematic viscosity at 100°C of 100.0 cSt available from ExxonMobil Chemical.

Sillitin Z is semi-reinforcing filler comprising a natural blend of quartz and kaolinite available from Hoffman Mineral of Germany.

Escorez 1102 is C5-C9 petroleum resin available from ExxonMobil Chemical, ZBEC is a zinc carbamate curative and VulKalent E is a curing retarder, available from RheinChemie.

EPDM materials A and B were extruded in a flat strip of 3mm thickness from a screw extruder having a barrel temperature of 65-70°C and a die temperature of 90°C. The temperature of the EPDM material leaving the extruder was in the region of 105-110°C. The extruded strip was then conveyed through a microwave oven and a hot air tunnel for vulcanization.

The cured EPDM strip was set in a mold and a commercially-available TPE-V, Santoprene 121-65 W233, which does not contain any PAO, was injection molded onto it so that it adhered onto the edge of the EPDM material strip to form a sheet having an EPDM material/TPE interface. A dumbbell-shaped specimen was then cut from the sheet with the interface located at about the middle of the narrow portion of the dumbbell. The adhesion at the interface was tested by pulling the specimen in a tensometer until delamination occurred at the interface. The test was carried out at three temperatures.

Properties of Santoprene 121-65 W233 are given in Table 2.

**Table 2: Some properties of Santoprene 121-65 W233**

| Property | Referenced Test Method | Test Unit | Typical Value |
|---|---|---|---|
| Hardness | | Shore A | |
| 5s* | ASTM D 2240 | | 65 |
| 15 s | ISO 868 | | 69 |
| Density | ISO 1183/ASTM D 792 | g/cm3 | 0.92 |
| Tensile strength at break** | ISO 37/ASTM D 412 | Mpa (psi) | 5.2 (750) |
| Elongation at break** | ISO 37/ASTM D 412 | % | 525 |
| Tensile stress at 100% elongation** | ISO 37/ASTM D 412 | Mpa (psi) | 2.0 (290) |
| | | %@23°C | |
| | ISO 815, Type A/ASTM | (73°F) | 20 |
| Compression set, 22 hrs., 25% | D 395, | %@70°C | |
| deflection | Method B, Type 1 | (158°F) | 45 |
| | | | |

| | | | |
|---|---|---|---|
| Values are for injection molded plaques, fan-gated, 102.0 mm x 152.0 mm x 2.0 mm (4.000" x 6.000" x 0.080") * Value is for injection molded plaque, side-gated 82.6 mm x 117.5 mm x 3.0 mm (3.250" x 4.625" x 0.120") ** Physical properties are measured across the flow direction - ISO type 1, ASTM die C | | | |

The results of the adhesion test are given in Table 3.

**Table 3: Adhesion results for specimens comprising EPDM material A or B molded on Santoprene 121-65 W233 TPE**

| Adhesion on Santoprene 121-65 | W233 | cpd A | cpd B |
|---|---|---|---|
| Room Temperature, TS | MPa | 2.08 | 2.44 |
| std dev. | | 0.12 | 0.32 |
| 80°C, TS | MPa | 0.98 | 0.90 |
| std dev. | | 0.10 | 0.03 |
| -10°C, TS | MPa | 3.97 | 4.47 |
| std dev. | | 0.05 | 0.35 |

As can been seen from Table 3, EPDM material A, comprising a polyolefin, shows improved adhesion onto a TPE at room temperature and at -10°C, as compared to EPDM material B, comprising as plasticizer only a conventional parafinnic oil. No effect was seen at 80°C.

## Claims

1. Structure comprising a first member of an elastomeric ethylene/propylene/diene monomer (EPDM) rubber material and a second member, adhering to the first member, of a thermoplastic elastomeric polymer (TPE) material different from that of the first member wherein at least the first member comprises a liquid modifier which comprises carbon and hydrogen, does not contain an appreciable extent of functional groups due to carbon unsaturation and/or heteroatoms and has the following characteristics:
a. a pour point (ASTM D97) of -10°C or less;
b. Viscosity Index (VI) as measured by ASTM D2270 of 120 or more;
c. a flash point (ASTM D92) of 200°C or more; and
d. a specific gravity (ASTM D4052, 15.6/15.6 °C) of 0.88 or less.

2. Structure as claimed in Claim 1, in which the second member also comprises a modifier.

3. Structure as claimed in Claim 1 or Claim 2, wherein the modifier comprises one or more of:
i) a polyalphaolefin which is an oligomer of an alphaolefm having from 5 to 14 carbon atoms;
ii) a hydrocarbon fluid with a branched paraffin:normal paraffin ratio ranging from 0.5:1 to 9:1;
iii) a Group III hydrocarbon basestock;
iv) a basestock derived from a Fischer-Tropsch hydrocarbon product.

4. Structure as claimed in Claim 3 in which the first member comprises up to 50% by weight of the polyalphaolefin.

5. Structure as claimed in Claim 3 in which the second elastomeric material comprises up to 50% by weight of the polyalphaolefin.

6. Structure according to any preceding claim, which is a weatherseal.

7. Process of making a shaped elastomeric structure according to Claim 1 comprising the steps of compounding and shaping the EPDM rubber material and the liquid modifier to provide the first member and then applying onto that first member the TPE material to provide the second member adhering to the first member.

8. Process as claimed in Claim 7 in which the first member is made by extrusion and cutting the extruded material into the desired length.

9. Process as claimed in Claim 7 or Claim 8 in which the TPE material is molded onto the first member.

10. Use, in a shaped structure comprising a first member of an elastomeric ethylene/propylene/diene monomer (EPDM) rubber material and a second member, different from that of the first member, of a thermoplastic elastomeric polymer (TPE) material, of a liquid modifier as defined in Claim 1 in combination with the EPDM rubber material to improve adhesion between the first and second members.

## Patentansprüche

1. Struktur, die ein erstes Element aus elastomerem Ethylen/Propylen/Dienmonomer(EPDM)-Kautschukmaterial und ein zweites Element, das an dem ersten Element haftet, aus thermoplastischem, elastomerem Polymer (TPE)-Material, das von dem des ersten Elements verschieden ist, umfaßt, wobei mindestens das erste Element flüssiges Modifizierungsmittel umfaßt, das Kohlenstoff und Wasserstoff umfaßt, aber keinen nennenswerten Umfang an funktionellen Gruppen aufgrund von Kohlenstoffungesättigkeit und/oder Heteroatomen enthält und die folgenden Eigenschaften zeigt:
a. Fließpunkt (ASTM D97) von -10°C oder niedriger,
b. Viskositätindex (VI) gemessen gemäß ASTM D2270 von 120 oder höher,
c. Flammpunkt (ASTM D92) von 200°C oder höher, und
d. spezifisches Gewicht (ASTM D4052, 15,6/15,6°C) von 0,88 oder niedriger.

2. Struktur nach Anspruch 1, bei der das zweite Element ebenfalls Modifizierungsmittel umfaßt.

3. Struktur nach Anspruch 1 oder Anspruch 2, bei der das Modifizierungsmittel ein oder mehrere von:
i) Polyalphaolefin, das ein Oligomer eines Alphaolefins mit 5 mit 14 Kohlenstoffatomen ist,
ii) Kohlenwasserstofffluid mit einem Verhältnis von verzweigtes Paraffin:normales Paraffin in Bereich von 0,5:1 bis 9:1,
iii) Gruppe III Kohlenwasserstoffgrundstock,
iv) Grundstock, der sich von einem Fischer-Tropsch Kohlenwasserstoffprodukt ableitet,
umfaßt.

4. Struktur nach Anspruch 3, bei der das erste Element bis zu 50 Gew.-% des Polyalphaolefins umfaßt.

5. Struktur nach Anspruch 3, bei der das zweite elastomere Material bis zu 50% des Polyalphaolefins umfaßt.

6. Struktur nach einem der vorhergehenden Ansprüche, die ein Wettersiegel ist.

7. Verfahren zur Herstellung einer geformten elastomeren Struktur gemäß Anspruch 1, das die Schritte des Compoundierens und Formens des EPDM-Kautschukmaterials und des flüssigen Modifizierungsmittels umfaßt, um das erste Element bereitzustellen, und anschließend die Aufbringung des TPE-Materials auf das erste Element umfaßt, um das zweite Element haftend an dem ersten Element bereitzustellen.

8. Verfahren nach Anspruch 7, bei dem das erste Element durch Extrusion und Schneiden des extrudierten Materials auf die gewünschte Länge hergestellt wird.

9. Verfahren nach Anspruch 7 oder Anspruch 8, bei dem das TPE-Material auf das erste Element geformt wird.

10. Verwendung in einer geformten Struktur, die ein erstes Element aus elastomerem Ethylen/Propylen/Dienmonomer (EPDM)-Kautschukmaterial und ein zweites Element, das von dem ersten Element verschieden ist, aus thermoplastischem elastomerem Polymer (TPE)-Materia umfaßt, eines flüssigen Modifizierungsmittels gemäß Anspruch 1 in Kombination mit dem EPDM-Kautschukmaterial, um die Haftung zwischen dem ersten Element und zweiten Element zu verbessern.

## Revendications

1. Structure comprenant un premier membre d'un matériau caoutchouc élastomère éthylène/propylène/monomère diénique (EPDM) et un deuxième membre, adhérant au premier membre, d'un matériau polymère élastomère thermoplastique (TPE) différent de celui du premier membre, dans laquelle au moins le premier membre comprend un modificateur liquide qui comprend du carbone et de l'hydrogène, ne contient pas un degré appréciable de groupes fonctionnels dus à une insaturation des atomes de carbone et/ou des hétéroatomes et possède les caractéristiques suivantes:
a. un point d'écoulement (ASTM D97) de -10°C ou moins;
b. un indice de viscosité (VI), mesuré par ASTM D2270, de 120 ou plus;
c. un point d'éclair (ASTM D92) de 200°C ou plus; et
d. une densité (ASTM D4052, 15,6/15,6 °C) de 0,88 ou moins.

2. Structure selon la revendication 1, dans laquelle le deuxième membre comprend aussi un modificateur.

3. Structure selon la revendication 1 ou la revendication 2, dans laquelle le modificateur comprend un ou plusieurs des suivants:
i) une poly-alpha-oléfine qui est un oligomère d'une alpha-oléfine possédant de 5 à 14 atomes de carbone;
ii) un fluide hydrocarboné ayant un rapport paraffine ramifiée/paraffine normale s'échelonnant de 0,5/1 à 9/1;
iii) une matière de base hydrocarbonée du Groupe III;
iv) une matière de base dérivée d'un produit hydrocarboné de Fischer-Tropsch.

4. Structure selon la revendication 3, dans laquelle le premier membre comprend jusqu'à 50% en poids de la poly-alpha-oléfine.

5. Structure selon la revendication 3, dans laquelle le deuxième matériau élastomère comprend jusqu'à 50% en poids de la poly-alpha-oléfine.

6. Structure selon l'une quelconque des revendications précédentes, qui est un caoutchouc d'étanchéité.

7. Procédé de fabrication d'une structure élastomère façonnée selon la revendication 1, comprenant les étapes consistant à formuler et façonner le matériau caoutchouc EPDM et le modificateur liquide pour obtenir le premier membre puis à appliquer sur ce premier membre le matériau TPE pour obtenir le deuxième membre adhérant au premier membre.

8. Procédé selon la revendication 7, dans lequel le premier membre est fabriqué par extrusion et découpage du matériau extrudé à la longueur voulue.

9. Procédé selon la revendication 7 ou la revendication 8, dans lequel le matériau TPE est moulé sur le premier membre.

10. Utilisation, dans une structure façonnée comprenant un premier membre d'un matériau caoutchouc élastomère éthylène/propylène/monomère diénique (EPDM) et un deuxième membre, différent de celui du premier membre, d'un matériau polymère élastomère thermoplastique (TPE), d'un modificateur liquide tel que défini dans la revendication 1 en combinaison avec le matériau caoutchouc EPDM pour améliorer l'adhérence entre les premier et deuxième membres.
